(19) Europäisches Patentamt
European Patent Office
Office européen des brevets

(11) **EP 4 073 130 B1**

(12) **EUROPEAN PATENT SPECIFICATION**

(45) Date of publication and mention of the grant of the patent:
**27.12.2023 Bulletin 2023/52**

(21) Application number: **20812075.8**

(22) Date of filing: **30.11.2020**

(51) International Patent Classification (IPC):
***C08F 210/16*** *(2006.01)* ***C08F 4/651*** *(2006.01)*

(52) Cooperative Patent Classification (CPC):
(C-Sets available)
**C08F 210/16** (Cont.)

(86) International application number:
**PCT/EP2020/083978**

(87) International publication number:
**WO 2021/115829 (17.06.2021 Gazette 2021/24)**

# (54) CATALYST COMPONENTS FOR THE POLYMERIZATION OF OLEFINS

KATALYSATORKOMPONENTEN ZUR POLYMERISIERUNG VON OLEFINEN

COMPOSANTS DE CATALYSEURS DE POLYMÉRISATION D’OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.12.2019 EP 19215185**

(43) Date of publication of application:
**19.10.2022 Bulletin 2022/42**

(73) Proprietor: **Basell Poliolefine Italia S.r.l.**
**20121 Milano (IT)**

(72) Inventors:
- **GUIDOTTI, Simona**
  **44122 Ferrara (IT)**
- **LIGUORI, Dario**
  **44122 Ferrara (IT)**
- **MORINI, Giampiero**
  **44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**WO-A1-02/051882** **GB-A- 1 574 830**
**US-A1- 2017 283 531** **US-B1- 9 815 920**

EP 4 073 130 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08F 210/16, C08F 4/6494;**
**C08F 210/16, C08F 4/651;**
**C08F 210/16, C08F 4/6545;**
C08F 210/16, C08F 210/08, C08F 2500/12, C08F 2500/27, C08F 2500/35

## Description

FIELD OF THE INVENTION

The present disclosure relates to a catalyst component for the polymerization of olefins, in particular ethylene and its mixtures with olefins $CH_2$=CHR, wherein R is an alkyl, cycloalkyl or aryl radical having 1-12 carbon atoms, comprising Ti, Mg, halogen, and a diazo compound as internal donor. The said catalyst components, when converted into a catalyst, can be used for the preparation of copolymers of ethylene with $\alpha$-olefins due to their capability of homogeneously distributing the $\alpha$-olefins along the polymer chain and among the various polymer chains.

BACKGROUND OF THE INVENTION

Linear low-density polyethylene (LLDPE) is one of the largest families of products in the polyolefin field. The family comprises ethylene/$\alpha$-olefin copolymers containing an amount of $\alpha$-olefin deriving units such that products with a density in the range 0.88-0.925 g/$cm^3$ are produced. Due to their characteristics, these copolymers find application in many sectors and in particular in the field of wrapping and packaging of goods where, for example, the use of stretchable film based on LLDPE constitutes an application of significant commercial importance. LLDPE is commercially produced with liquid phase processes (solution or slurry) or via more economical gas-phase processes. Both types of processes involve the widespread use of Ziegler-Natta $MgCl_2$-supported catalysts that can be y formed by the reaction of a solid catalyst component, in which a titanium compound is supported on a magnesium halide, with an activator such as an alkylaluminium compound.

For the preparation of LLDPE catalysts need to show good comonomer distribution suitably coupled with high polymerization yields.

The homogeneous distribution of the comonomer ($\alpha$-olefin) in and among the polymer chains is a relevant property. In fact, having a comonomer randomly or alternatively distributed along the polymer chain and, at the same time, having the polymer fractions with a similar average content of comonomer (narrow distribution of composition) allows the achievement of high quality ethylene copolymers. These latter combine, at the same time, a density sufficiently low with respect to HDPE and a low content of polymer fractions soluble in hydrocarbon solvents like hexane or xylene that may worsen certain properties of the resulting copolymers.

In view of the above, there is the need for the catalysts used in LLDPE preparation, particularly in gas-phase, to show a good ability to homogeneously distribute the comonomer and to produce an ethylene copolymer having reduced polymer density and low content of hydrocarbon soluble matter.

Single-site homogeneous catalysts are endowed with these features when used in solution processes but unfortunately they lose their effectiveness in terms of activity and polymer morphology when fixed on supports for use in different polymerization techniques such as gasphase polymerization.

Ziegler-Natta heterogeneous catalysts are much less effective in producing ethylene copolymer in which the comonomer is homogeneously distributed and the amount of hydrocarbon soluble matter is relatively low. However, they are suited to work in any polymerization technology. The use of an internal electron donor, such as tetrahydrofuran (THF), in the solid catalyst component preparation allows in some cases for an improvement of the homogeneity of comonomer distribution.

In EP 1058696 is disclosed a catalyst component for the preparation of ethylene homo and copolymers in which an alkyl substituted pyridine is used as internal donor. In addition to not showing any benefit in the homogeneous comonomer distribution, the document reports that the pyridine derivatives have a remarkable depressive effect on polymerization activity. GB 1574830, US9815920 and WO02/051882 disclose further catalyst systems.

It is therefore felt the need of a versatile catalyst component displaying both ability to give a homogeneous comonomer distribution in the preparation of ethylene copolymers and good polymerization activity.

SUMMARY OF THE INVENTION

The present disclosure provides a solid catalyst component for the polymerization of olefins comprises Mg, Ti, halogen and at least one compound of formula (I)

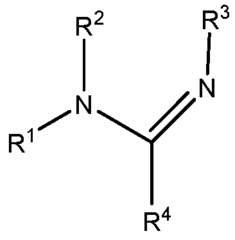

(I)

wherein

$R^1$ is selected from the group consisting of hydrogen and $C_1$-$C_{15}$ linear, branched or cyclic hydrocarbon groups;
$R^2$ is selected from the group consisting of hydrogen and $C_1$-$C_{15}$ linear, branched or cyclic hydrocarbon groups;
$R^3$ is selected from the group consisting of hydrogen and $C_1$-$C_{15}$ linear, branched or cyclic hydrocarbon groups;
$R^4$ is selected from the group consisting of hydrogen, $C_1$-$C_{15}$ hydrocarbon groups, and $-NR^5R^6$, wherein
$R^5$ is selected from the group consisting of hydrogen and $C_1$-$C_{15}$ linear, branched or cyclic hydrocarbon groups and
$R^6$ is selected from the group consisting of hydrogen and $C_1$-$C_{15}$ linear, branched or cyclic hydrocarbon groups;
and in which the two couples of groups $R^1$ with $R^4$ and $R^2$ with $R^3$ can optionally be joined to form a non-aromatic cyclic structure, said compound (I) being present in an amount such that the compound (I)/Ti molar ratio in the final solid catalyst component ranges from 0.2 to 6.

DETAILED DESCRIPTION OF THE INVENTION

Preferably, in the compound of formula (I) $R^1$ and $R^2$ are selected from $C_1$-$C_{10}$, preferably $C_1$-$C_5$ alkyl groups; $R^3$ is selected from hydrogen or $C_1$-$C_5$ alkyl groups and $R^4$ is selected from $-NR^5R^6$ groups where $R^5$ and $R^6$ are preferably selected from hydrogen or $C_1$-$C_5$ alkyl groups. Non-limiting examples of structures of formulas (I) within this embodiment are the following: 1,1-dipropylguanidine, 1-ethyl-1-propylguanidine, 1-methyl-1-propylguanidine, 1-butyl-1-propylguanidine, 1-ethyl-1-methylguanidine, 1,1-dimethylguanidine, 1-butyl-1-methylguanidine, 1,1-diethylguanidine, 1-butyl-1-ethylguanidine, 1,1-dibutylguanidine, 1-butyl-3,3-dimethyl-1-propylguanidine, 1-butyl-1-ethyl-3,3-dimethylguanidine, 1-butyl-1,3,3-trimethylguanidine, 1,1-dibutyl-3,3-dimethylguanidine, 1-butyl-3,3-diethyl-1-propylguanidine, 1-butyl-1,3,3-triethylguanidine, 1-butyl-3,3-diethyl-1-methylguanidine, 1,1-dibutyl-3,3-diethylguanidine, 1-ethyl-3,3-dimethyl-1-propylguanidine, 1,1,3-triethyl-3-propylguanidine, 1,1-diethyl-3,3-dimethylguanidine, 1-ethyl-1,3,3-trimethylguanidine, 1,1,3,3-tetraethylguanidine, 1,1,3,3-tetramethylguanidine, 1,1,3-triethyl-3-methylguanidine, 1,1,3-trimethyl-3-propylguanidine, 1,1-diethyl-3-methyl-3-propylguanidine, 1,1-diethyl-3,3-dimethylguanidine, 1,1-dimethyl-3,3-diproylguanidine, 1,1-diethyl-3,3-dipropylguanidine]. Among them, 1,1,3,3-tetramethyl guanidine (TMG)] is the most preferred.

In another preferred embodiment, in the compound of formula (I) the couples formed by $R^1$-$R^4$ and $R^2$-$R^3$ are joined together to form non-aromatic ring structures. Preferably, they are joined to form ring structures, which, preferably, are made of five or more members. In a still preferred embodiment, the couple $R^1$-$R^4$ forms a 5-7 members saturated ring structure and the couple $R^2$-$R^3$ forms a six-member unsaturated ring because of the C=N double bond present in the formula (I). In view the backbone of the compound of formula (I), when the $R^1$-$R^4$ and $R^2$-$R^3$ are joined together to form non-aromatic cyclic structures, compounds having fused heterocyclic rings are obtained. Non-limiting examples of structures of formulas (I) within this embodiment are the following: 2,5,6,7-tetrahydro-3H-pyrrolo[1,2-α]imidazole, 2,3,5,6,7,8-hexahydroimidazo[1,2-α]pyridine, 2,5,6,7,8,9-hexahydro-3H-imidazo[1,2-α]azepine, 2,3,4,6,7,8,9,10-octahydropyrimido[1,2-α]azepine, 1.8-diazabicyclo[5.4.0]undec-7-ene, 3,4,6,7,8,9-hexahydro-2*H*-pyrido[1,2-α]pyrimidine, 1,5-diazabicyclo[4.3.0]non-5-ene], 2,3,4,6,7,8-hexahydropyrrolo[1,2-α]pyrimidine. Among them, 1.8-diazabicyclo[5.4.0]undec-7-ene (DBU) and 1,5-diazabicyclo[4.3.0] non-5-ene (DBN) are most preferred.

In addition to the compound of formula (I), the solid catalyst components preferably comprises a titanium compound having at least a Ti-halogen bond supported on a Mg halide. The magnesium halide is preferably $MgCl_2$.

The preferred titanium compounds used in the catalyst component of the present disclosure are $TiCl_4$ and $TiCl_3$; furthermore, also Ti-haloalcoholates of formula $Ti(OR^7)_{m-y}X_y$ can be used, where m is the valence of titanium, y is a number between 1 and m-1, X is halogen and $R^7$ is a hydrocarbon radical having from 1 to 10 carbon atoms.

The preparation of the solid catalyst component can be carried out according to several methods.

According to a preferred method, the solid catalyst component can be prepared by reacting a titanium compound, preferably $TiCl_4$, with a magnesium chloride deriving from an adduct of formula $MgCl_2 \cdot pR^8OH$, where p is a number between 0.1 and 6, preferably from 2 to 3.5, and $R^8$ is a hydrocarbon radical having 1-18 carbon atoms. The adduct can be suitably prepared in spherical form by mixing alcohol and magnesium chloride in the presence of an inert hydrocarbon

immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is lower than 3, preferably between 0.1 and 2.5. The reaction with the Ti compound can be carried out by suspending the adduct (dealcoholated or as such) in cold $TiCl_4$ (about 0°C); the mixture is heated up to 80-130°C and kept at this temperature for 0.5-2 hours. The treatment with $TiCl_4$ can be carried out one or more times. The compound (I) is preferably added during the treatment with $TiCl_4$.

One preferred method comprises the following steps:

(a) contacting a $MgCl_2$•$pR^8OH$ adduct disclosed above with a liquid medium comprising a Ti compound having at least a Ti-Cl bond, in an amount such that the Ti/Mg molar ratio is greater than 3, thereby forming a solid intermediate;
(b) contacting the compound (I) as previously defined with the solid intermediate product coming from (a) followed by washing the so obtained product.

The contact may be carried out in a liquid medium such as a liquid hydrocarbon. The temperature at which the contact takes place can vary depending on the nature of the reagents and may range from -10° to 150°C and preferably from 0° to 120°C. It is clear that temperatures causing the decomposition or degradation of any specific reagents should be avoided. Also the time of the treatment can vary in dependence of other conditions such as nature of the reagents, temperature, concentration etc. As a general indication, this contact step can last from 10 minutes to 10 hours more preferably from 0.5 to 5 hours. If desired, in order to further increase the final donor content, this step can be repeated one or more times.

At the end of this step the solid is recovered by separation of the suspension via the conventional methods (such as settling and removing of the liquid, filtration, centrifugation) and can be subject to washings with solvents. The washings can be carried out with inert hydrocarbon liquids or with polar solvents (having for example a higher dielectric constant) such as halogenated or oxygenated hydrocarbons.

According to a specific embodiment, a preferred modification of the process comprises subjecting the solid coming from step (a) to a prepolymerization step (a2) before carrying out step (b).

The pre-polymerization can be carried out with any of the olefins $CH_2$=CHR, where R is H or a $C_1$-$C_{10}$ hydrocarbon group. In particular, it is especially preferred to pre-polymerize ethylene or propylene or mixtures thereof with one or more $\alpha$-olefins, said mixtures containing up to 20% in moles of $\alpha$-olefin, forming amounts of polymer from about 0.1 g up to about 1000 g per gram of solid intermediate, preferably from about 0.5 to about 500 g per gram of solid intermediate, more preferably from 0.5 to 50 g per gram of solid intermediate and especially from 0.5 to 5 g per gram of solid intermediate. The pre-polymerization step can be carried out at temperatures from 0 to 80°C, preferably from 5 to 70°C, in the liquid or gas phase. The pre-polymerization of the intermediate with ethylene or propylene in order to produce an amount of polymer ranging from 0.5 to 20 g per gram of intermediate is particularly preferred. The pre-polymerization is carried out with the use of a suitable cocatalyst such as organoaluminum compounds. When the solid intermediate is prepolymerized with propylene it is especially preferred that the prepolymerization is carried out in the presence of one or more external donors preferably selected from the group consisting of silicon compounds of formula $R_a^9R_b^{10}Si(OR^{11})_c$, where a and b are integer from 0 to 2, c is an integer from 1 to 3 and the sum (a+b+c) is 4; $R^9$, $R^{10}$, and $R^{11}$, are alkyl, cycloalkyl or aryl radicals with 1-18 carbon atoms optionally containing heteroatoms. Particularly preferred are the silicon compounds in which a is 1, b is 1, c is 2, at least one of $R^9$ and $R^{10}$ is selected from branched alkyl, cycloalkyl or aryl groups with 3-10 carbon atoms optionally containing heteroatoms and $R^{11}$ is a $C_1$-$C_{10}$ alkyl group, in particular methyl. Examples of such preferred silicon compounds are methylcyclohexyldimethoxysilane (C donor), diphenyldimethoxysilane, methyl-t-butyldimethoxysilane, dicyclopentyldimethoxysilane (D donor), diisopropyldimethoxysilane,

Al the above mentioned processes can be used for the preparation of particles of solid catalyst components having substantially spherical morphology and average diameter comprised between 5 and 150 $\mu$m, preferably from 10 to 100 $\mu$m. As particles having substantially spherical morphology, those are meant wherein the ratio between the greater axis and the smaller axis is equal to, or lower than 1.5, and preferably lower than 1.3.

The compound (I)/Ti molar ratio in the final solid catalyst component ranges from 0.2 to 6 preferably from 0.3 to higher than 1.5, and more preferably ranges from 0.3 to 5, especially from 0.4 to 4.

The content of compound (I) may range from 1 to 30%wt with respect to the total weight of the solid catalyst component (not prepolymerized), more preferably from 2 to 20%wt.

The Mg/Ti molar ratio preferably ranges from 5 to 50, more preferably from 10 to 40.

The solid catalyst components obtained according to the above method can have a surface area (by B.E.T. method) between 10 and 200 $m^2$/g and preferably between 20 and 80 $m^2$/g, and a total porosity (by B.E.T. method)

higher than 0.15 $cm^3/g$ preferably between 0.2 and 0.6 $cm^3/g$. The porosity (Hg method) due to pores with radius up to 10.000 Å may range from 0.25 to 1 $cm^3/g$, preferably from 0.35 to 0.8 $cm^3/g$.

The catalyst components of the disclosure whatever is the method for their preparation, form catalysts, for the polymerization of alpha-olefins $CH_2$=CHR wherein R is hydrogen or a hydrocarbon radical having 1-12 carbon atoms by reaction with Al-alkyl compounds. In particular Al-trialkyl compounds, for example Al-trimethyl, Al-triethyl, Al-tri-n-butyl, Al-triisobutyl are preferred. The Al/Ti ratio is higher than 1 and is preferably comprised between 5 and 800.

Also alkylaluminum halides and in particular alkylaluminum chlorides such as diethylaluminum chloride (DEAC), diisobutylaluminum chloride, Al-sesquichloride and dimethylaluminum chloride (DMAC) can be used. It is also possible to use, and in certain cases preferred, mixtures of trialkylaluminum compounds with alkylaluminum halides. Among them mixtures TEAL/DEAC and TIBA/DEAC are particularly preferred.

Optionally, an external electron donor (ED) can be used during polymerization. The external electron donor compound can be equal to, or different from, the internal donors used in the solid catalyst component. Preferably, it is selected from the group consisting of ethers, esters, amines, ketones, nitriles, silanes and mixtures of the above. In particular, it can preferably be selected from the $C_2$-$C_{20}$ aliphatic ethers and especially from cyclic ethers preferably having 3-5 carbon atoms cyclic ethers such as tetrahydrofuran and dioxane.

In addition to the aluminium alkyl cocatalyst (B) and the possible use of an external electron donor (ED) as a component (C), it is possible to use a halogenated compound (D) as activity enhancer. Said compound is preferably a mono or dihalogenated hydrocarbon. In one preferred embodiment, it is chosen among monohalogenated hydrocarbons in which the halogen is linked to a secondary carbon atom. The halogen is preferably chosen among chloride and bromide.

Non-limiting exemplary compounds (D) are propylchloride, i-propylchloride, butylchloride, s-butylchloride, t-butylchloride 2-chlorobutane, cyclopentylchloride, cyclohexylchloride, 1,2-dichloroethane, 1,6-dichlorohexane, propylbromide, i-propylbromide, butylbromide, s-butylbromide, t-butylbromide, i-butylbromide i-pentylbromide, and t-pentylbromide. Among them, particularly preferred are i-propylchloride, 2-chlorobutane, cyclopentylchloride, cyclohexylchloride, 1,4-dichlorobutane and 2-bromopropane.

According to another embodiment the compounds can be chosen from among halogenated alcohols, esters or ethers such as 2,2,2,-trichloroethanol, ethyl trichloroacetate, butyl perchlorocrotonate, 2-chloro propionate and 2-chloro-tetrahydrofurane.

The activity enhancer can be used in amounts such as to have the (B)/(D) molar ratio of higher than 3 and preferably in the range 5-50 and more preferably in the range 10-40.

Therefore, it constitutes a further object of the present disclosure a process for the (co)polymerization of olefins $CH_2$=CHR, in which R is hydrogen or a hydrocarbyl radical with 1-12 carbon atoms, carried out in the presence of the catalyst of the present disclosure.

The polymerization process can be carried out according to available techniques for example slurry polymerization using as diluent an inert hydrocarbon solvent, or bulk polymerization using the liquid monomer (for example propylene) as a reaction medium. Moreover, it is possible to carry out the polymerization process in gas-phase operating in one or more fluidized or mechanically agitated bed reactors.

The polymerization may be carried out at temperature of from 20 to 120°C, preferably of from 40 to 80°C. When the polymerization is carried out in gas-phase the operating pressure may range between 0.5 and 5 MPa, preferably between 1 and 4 MPa. In the bulk polymerization the operating pressure ranges between 1 and 8 MPa, preferably between 1.5 and 5 MPa.

If a non prepolymerized solid catalyst component is used, a pre-polymerization step can be carried out before the main polymerization stage. It can be carried out as previously described although, for large scale plants, the conversion in prepolymerization is preferably in the range from 250 g up to about 1000 g per gram of solid catalyst component.

When LLDPE is produced, ethylene is copolymerized with $C_3$-$C_{10}$ $\alpha$-olefins which may include include propylene, 1-butene, 1-hexene, and 1-octene, the like, and mixtures thereof. Preferably, the $\alpha$-olefin is 1-butene, 1-hexene, or a mixture thereof. The amount of $\alpha$-olefin used depends on the density of LLDPE desired. Preferably, the $\alpha$-olefin is used in amount within the range of 5 to 10 wt% of ethylene. The density of LLDPE is preferably within the range of 0.88 to 0.940 $g/cm^3$, more preferably within the range of 0.910 to 0.940 $g/cm^3$, and most preferably within the range of 0.915 to 0.935 $g/cm^3$. The LLDPE preferably has a melt index MI"E" within the range of 0.1 to 10 dg/min, and more preferably within the range of 0.5 to 8 dg/min.

A particularly preferred LLDPE resin is a copolymer of ethylene and 1-butene having 1-butene content within the range of 5 to 10 wt%. The ethylene-1-butene copolymer preferably has a density from 0.912 to 0.925 $g/cm^3$ and, more preferably, from 0.915 to 0.920 $g/cm^3$. The ethylene-1-butene copolymer preferably has an MI"E" within the range of 0.5 to 15 dg/min and, more preferably, from 1 to 10 dg/min

The catalyst components of the present application can be used for production in gasphase of the LLDPE described above.

The following examples are given in order to further describe the present disclosure.

## CHARACTERIZATION

The properties are determined according to the following methods:

## Determination of Mg, Ti

The determination of Mg, $Ti_{(TOT)}$, content in the solid catalyst component has been carried out via inductively coupled plasma emission spectroscopy on "I.C.P Spectrometer ARL Accuris".

The sample was prepared by analytically weighting, in a "Fluxy" platinum crucible", 0.1÷0.3 grams of catalyst and 2 grams of lithium metaborate/tetraborate 1/1 mixture. After addition of some drops of KI solution, the content of the crucible is subj ected to complete burning. The residue is collected with a 5% v/v HNO3 solution and then analyzed via ICP at the following wavelengths: magnesium, 279.08 nm; titanium, 368.52 nm;

## Determination of internal donor content

The determination of the content of internal donor in the solid catalyst component was done through $^1H$ NMR analysis, dissolving the catalyst (about 40 mg) in acetone $d^6$ (about 0.6 ml) in the presence of an internal standard and transferred in to a 5 mm (O.D.) NMR tube. The amount of donor present was referred to the weight of the catalyst compound.

## Determination of Melt Index (MI E, MII', MIP)

The melt indices are measured at 190 °C according to ASTM D-1238, condition "E" (load of 2.16 kg), "P" (load of 5.0 kg) and "F" (load of 21.6 kg).

The ratio between MIF and MIE is indicated as F/E, while the ratio between MIF and MIP is indicated as F/P.

## Determination of fraction soluble in xylene

The solubility in xylene at 25°C was determined according to the following method: about 2.5 g of polymer and 250 mL of o-xylene were placed in a round-bottomed flask provided with cooler and a reflux condenser and kept under nitrogen. The mixture obtained was heated to 135°C and was kept under stirring for about 60 minutes. The final solution was allowed to cool to 25°C under continuous stirring, and was then filtered. The filtrate was then evaporated in a nitrogen flow at 140°C to reach a constant weight. The content of said xylene-soluble fraction is expressed as a percentage of the original 2.5 grams.

## Determination of comonomer content

1-Butene was determined via $^{13}C$ NMR analysis.

13C NMR spectra were acquired on a Bruker AV-600 spectrometer equipped with cryo-probe, operating at 150.91 MHz in the Fourier transform mode at 120°C.

The peak of the $S\delta\delta$ carbon (nomenclature according to C. J. Carman, R. A. Harrington and C. E. Wilkes, Macromolecules, 10, 3, 536 (1977)) was used as internal reference at 29.90 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. About 512 transients were stored in 32K data points using a spectral window of 9000 Hz.

Assignments of the spectra were made according to J.C. Randal, Macromol. Chem Phys., C29, 201 (1989).

Triad distribution and composition were made starting from relations between peaks and triads described by Kakugo *et al.* modified to consider overlaps of signals in the spectra.

Triads

$$BBB = 100\ T\beta\beta/S$$

$$BBE = 100\ T\beta\delta/S$$

$$EBE = 100\ 2B2\ (EBE)\ /S$$

$$BEB = 100\ S\beta\beta/S$$

$$BEE= 100\ S\alpha\delta/S$$

$$EEE = 100\ (0.25\ S\gamma\delta+0.5\ S\delta\delta)/S$$

Molar composition

$$B= BBB + BBE+ EBE$$

$$E = EEE + BEE + BEB$$

**Determination of effective density**

Effective density: ASTM-D 1505-10 but referred to MI"E" 1 g/10' as corrected by the following equation: density (MIE=1) =density(measured) -0.0024 ln(MI E)

**General procedure for the preparation of spherical $MgCl_2$•(EtOH)m adducts.**

An initial amount of microspheroidal $MgCl_2 \cdot 2.8C_2H_5OH$ was prepared according to the method described in Example 2 of WO98/44009 but on a larger scale. The stirring conditions during the preparation were adjusted in order to obtain the desired average particle size. The resulting microspheroidal $MgCl_2$-EtOH adduct was subjected to a thermal treatment under nitrogen stream over a temperature range of 50-150°C, to reduce the alcohol content. Using this method, a solid support materials containing 28.5%wt of EtOH, having average particle size of 23 μm was obtained.

**General procedure for the LLDPE polymerization test in slurry**

A 4.5 liter stainless-steel autoclave equipped with a magnetic stirrer, temperature, pressure indicator, and feeding line for ethylene, propane, 1-butene, and hydrogen, and a steel vial for the injection of the catalyst, was purified by fluxing pure nitrogen at 70°C for 60 minutes. The autoclave was then washed with propane, heated to 75°C and finally loaded with 800 grams of propane, 1-butene in the amount reported in Table 1, ethylene (7.0 bar, partial pressure) and hydrogen (1.5 bar, partial pressure). In a separate 100 cm3 round bottom glass flask were subsequently introduced 50 $cm^3$ of anhydrous hexane, the cocatalyst mixture solution composed by triethyl aluminum/diethyl aluminum chloride, TEA/DEAC 2/1 weight ratio (8.5 mmol of aluminum), 0.12 g of tetrahydrofuran as external donor, and 0.010÷0.020 grams of the solid catalyst component; they were mixed together and stirred at room temperature for 10 minutes and then introduced in the reactor through the steel vial by using a nitrogen overpressure. Under continuous stirring, the total pressure was maintained constant at 75°C in order to absorb 150 g of ethylene or for a maximum time of 2 h by continuous ethylene feeding into the system. At the end of the polymerization, the reactor was depressurized and the temperature was reduced to 30°C. The recovered polymer was dried at 70°C under a nitrogen flow and weighted.

**EXAMPLES**

**Comparative Example 1**

Preparation of the solid component.

Into a 750 mL four-necked round flask, purged with nitrogen, 430 mL of $TiCl_4$ were introduced at 0°C. Then, at the same temperature, 34.4 grams of above described spherical adduct were added under stirring. The temperature

was raised to 130°C and maintained at that temperature for 1 hour. Then, the stirring was discontinued, the solid product was allowed to settle and the supernatant liquid was siphoned off. A new amount of fresh $TiCl_4$ was added to the flask, such to reach the initial liquid volume. The temperature was maintained at 110°C for 0.5 hour. Again, the solid was allowed to settle, and the liquid was siphoned off. The solid was then washed three times with anhydrous heptane (250 mL at each washing) at 90°C and twice (2 x 250 mL) at 40°C with anhydrous hexane. Subsequently, the solid was recovered, dried under vacuum and analyzed. The solid showed the following characteristics: Ti = 4.8% (by weight), Mg = 19.1% (by weight). The catalyst performances in slurry copolymerization of ethylene and butene are shown in Table 1.

**Example 2**

Preparation of the solid component.

Into a 500 mL four-necked round flask, purged with nitrogen, 195 mL of anhydrous heptane were introduced at room temperature. Then, at the same temperature, 7.7 grams of solid component described in Example 1 were added under stirring. Subsequently, to the slurry of so-obtained solid component in heptane, were added at room temperature under stirring 0.6 mL of 1.8-diazabicyclo[5.4.0]undec-7-ene (DBU), (Mg/ID molar ratio of 15). The temperature was raised to 50°C and maintained at that temperature for 1 hour. Then, the stirring was discontinued, the solid product was allowed to settle and the supernatant liquid was siphoned off. A new amount of fresh anhydrous heptane was added to the flask, such to reach the initial liquid volume. The temperature was maintained at 95°C for 2 hours. Again, the solid was allowed to settle, and the liquid was siphoned off. The solid was then washed two times with anhydrous heptane at 60°C and twice with anhydrous hexane, at 40°C and at room temperature. Subsequently, the solid was recovered, dried under vacuum and analyzed. The solid showed the following characteristics: Ti = 3.8% (by weight), Mg = 18.6% (by weight), DBU = 7.5% (by weight). The catalyst performances in slurry copolymerization of ethylene and butene are shown in Table 1.

**Example 3**

Preparation of the solid component.

Into a 500 mL four-necked round flask, purged with nitrogen, 275 mL of $TiCl_4$ were introduced at 0°C. Then, at the same temperature, 11 grams of above described spherical adduct were added under stirring. The temperature was raised to 130°C and maintained at that temperature for 1 hour. Then, the stirring was discontinued, the solid product was allowed to settle and the supernatant liquid was siphoned off. A new amount of fresh $TiCl_4$ was added to the flask, such to reach the initial liquid volume. At ca. 70°C were slowly added, under stirring, 1,3 mL of 1,1,3,3-tetramethyl guanidine (TMG), (Mg/ID molar ratio of 8). The temperature was subsequently increased at 115°C and maintained at this value for 1 hour. Again, the solid was allowed to settle, and the liquid was siphoned off. The solid was then washed three times with anhydrous heptane at 90°C and twice with anhydrous hexane, at 40°C and at room temperature. Subsequently, the solid was recovered, dried under vacuum and analyzed. The solid showed the following characteristics: Ti = 5.3% (by weight), Mg = 16.5% (by weight), TMG = 7.4% (by weight). The catalyst performances in slurry copolymerization of ethylene and butene are shown in Table 1.

**Table 1**

| EX | ID type | 1-butene fed g | Activity Kg/g/h | MIE g/10' | $C_4$-%wt. | XS % | Density g/cm$^3$ | F/P | F/E |
|---|---|---|---|---|---|---|---|---|---|
| C1 | none | 100 | 34.7 | 0.72 | 7.6 | 9.6 | 0.921 | 9.5 | 27.4 |
| 2 | DBU | 160 | 5.6 | 0.48 | 7.0 | 5.9 | 0.921 | 9.4 | 24.9 |
| 3 | TMG | 160 | 14.9 | 0.51 | 7.6 | 8.5 | 0.919 | 8.9 | 25.9 |

**Claims**

1. A solid catalyst component for the (co)polymerization of olefins, comprising Ti, Mg, halogen, and at least one compound of formula (I)

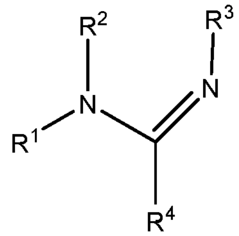

(I)

wherein

$R^1$ is selected from the group consisting of hydrogen and $C_1$-$C_{15}$ linear, branched or cyclic hydrocarbon groups;
$R^2$ is selected from the group consisting of hydrogen and $C_1$-$C_{15}$ linear, branched or cyclic hydrocarbon groups;
$R^3$ is selected from the group consisting of hydrogen and $C_1$-$C_{15}$ linear, branched or cyclic hydrocarbon groups;
$R^4$ is selected from the group consisting of hydrogen, $C_1$-$C_{15}$ hydrocarbon groups, and - $NR^5R^6$, wherein
$R^5$ is selected from the group consisting of hydrogen and $C_1$-$C_{15}$ linear, branched or cyclic hydrocarbon groups and
$R^6$ is selected from the group consisting of hydrogen and $C_1$-$C_{15}$ linear, branched or cyclic hydrocarbon groups;
and in which the two couples of groups $R^1$ with $R^4$ and $R^2$ with $R^3$ can optionally be joined to form a non-aromatic cyclic structure, said compound (I) being present in an amount such that the compound (I)/Ti molar ratio in the final solid catalyst component ranges from 0.2 to 6.

**2.** The catalyst component according to claim 1 in which, in the compound of formula (I), $R^1$ and $R^2$ are selected from $C_1$-$C_{10}$, preferably $C_1$-$C_5$ alkyl groups; $R^3$ is selected from hydrogen or $C_1$-$C_5$ alkyl groups and $R^4$ is selected from $-NR^5R^6$ groups where $R^5$ and $R^6$ are selected from hydrogen or $C_1$-$C_5$ alkyl groups.

**3.** The catalyst component according to any of the preceding claims in which the compound (I) is selected from the group consisting of 1,1-dipropylguanidine, 1-ethyl-1-propylguanidine, 1-methyl-1-propylguanidine, 1-butyl-1-propylguanidine, 1-ethyl-1-methylguanidine, 1,1-dimethylguanidine, 1-butyl-1-methylguanidine, 1,1-diethylguanidine, 1-butyl-1-ethylguanidine, 1,1-dibutylguanidine, 1-butyl-3,3-dimethyl-1-propylguanidine, 1-butyl-1-ethyl-3,3-dimethylguanidine, 1-butyl-1,3,3-trimethylguanidine, 1,1-dibutyl-3,3-dimethylguanidine, 1-butyl-3,3-diethyl-1-propylguanidine, 1-butyl-1,3,3-triethylguanidine, 1-butyl-3,3-diethyl-1-methylguanidine, 1,1-dibutyl-3,3-diethylguanidine, 1-ethyl-3,3-dimethyl-1-propylguanidine, 1,1,3-triethyl-3-propylguanidine, 1,1-diethyl-3,3-dimethylguanidine, 1-ethyl-1,3,3-trimethylguanidine, 1,1,3,3-tetraethylguanidine, 1,1,3,3-tetramethylguanidine, 1,1,3-triethyl-3-methylguanidine, 1,1,3-trimethyl-3-propylguanidine, 1,1-diethyl-3-methyl-3-propylguanidine, 1,1-diethyl-3,3-dimethylguanidine, 1,1-dimethyl-3,3-diproylguanidine, 1,1-diethyl-3,3-dipropylguanidine and mixtures thereof.

**4.** The solid catalyst component according to any of the preceding claims in which the compound of formula (I) is 1,1,3,3-tetramethyl guanidine.

**5.** The catalyst component according to any of the preceding claims in which in the compound of formula (I) the couples formed by $R^1$-$R^4$ and $R^2$-$R^3$ are joined together to form non-aromatic ring structures.

**6.** The catalyst component according to any of the preceding claims in which they are joined to form ring structures of five or more members.

**7.** The catalyst component according to any of the preceding claims in which the couple $R^1$-$R^4$ forms a 5-7 members saturated ring structure and the couple $R^2$-$R^3$ forms a six-member unsaturated ring.

**8.** The catalyst component according to any of the preceding claims in which the compound of formula (I) is selected from 1.8-diazabicyclo[5.4.0]undec-7-ene (DBU) and 1,5-diazabicyclo[4.3.0] non-5-ene (DBN).

**9.** The solid catalyst component according to any of the preceding claims in which the content of compound (I) ranges from 1 to 30%wt with respect to the total weight of the solid catalyst component.

**10.** The catalyst component according to according to any of the preceding claims in which the Mg/Ti molar ratio ranges from 5.0 to 50.

**11.** A catalyst system for the polymerization of olefins comprising the product of the reaction between:

(A) a solid catalyst component according one or more of claims 1- 10,
(B) an alkylaluminum compound and, optionally,
(C) an external electron donor compound (ED).

**12.** A process for the preparation of olefin (co)polymer carried out by (co)polymerizing olefins in the presence of a catalyst system according to claim 11.

**13.** The process according to claim 12 for the preparation of linear low density polyethylene (LLDPE).

**14.** The process according to claim 13 being carried out in gas-phase.

**Patentansprüche**

**1.** Feste Katalysatorkomponente zur (Co)polymerisation von Olefinen, umfassend Ti, Mg, Halogen und mindestens eine Verbindung der Formel (I)

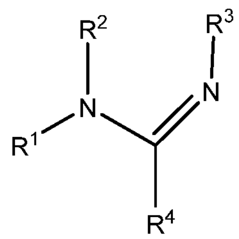

(I)

wobei

$R^1$ ausgewählt ist aus der Gruppe bestehend aus Wasserstoff und linearen, verzweigten oder cyclischen $C_1$-$C_{15}$-Kohlenwasserstoffgruppen;
$R^2$ ausgewählt ist aus der Gruppe bestehend aus Wasserstoff und linearen, verzweigten oder cyclischen $C_1$-$C_{15}$-Kohlenwasserstoffgruppen;
$R^3$ ausgewählt ist aus der Gruppe bestehend aus Wasserstoff und linearen, verzweigten oder cyclischen $C_1$-$C_{15}$-Kohlenwasserstoffgruppen;
$R^4$ ausgewählt ist aus der Gruppe bestehend aus Wasserstoff, $C_1$-$C_{15}$-Kohlenwasserstoffgruppen und -$NR^5R^6$, wobei
$R^5$ ausgewählt ist aus der Gruppe bestehend aus Wasserstoff und linearen, verzweigten oder cyclischen $C_1$-$C_{15}$-Kohlenwasserstoffgruppen und
$R^6$ ausgewählt ist aus der Gruppe bestehend aus Wasserstoff und linearen, verzweigten oder cyclischen $C_1$-$C_{15}$-Kohlenwasserstoffgruppen;
und wobei die beiden Paare der Gruppen $R^1$ mit $R^4$ und $R^2$ mit $R^3$ gegebenenfalls verbunden sein können, um eine nicht-aromatische cyclische Struktur zu bilden, wobei die Verbindung (I) in einer solchen Menge vorhanden ist, dass das molare Verhältnis von Verbindung (I)/Ti in der fertigen festen Katalysatorkomponente im Bereich von 0,2 bis 6 liegt.

**2.** Katalysatorkomponente nach Anspruch 1, wobei in der Verbindung der Formel (I) $R^1$ und $R^2$ ausgewählt sind aus $C_1$-$C_{10}$-, vorzugsweise Ci-Cs-Alkylgruppen; $R^3$ ausgewählt ist aus Wasserstoff oder $C_1$-$C_5$-Alkylgruppen, und $R^4$ ausgewählt ist aus Gruppen -$NR^5R^6$, wobei $R^5$ und $R^6$ ausgewählt sind aus Wasserstoff oder $C_1$-$C_5$-Alkylgruppen.

3. Katalysatorkomponente nach einem der vorhergehenden Ansprüche, wobei die Verbindung (I) ausgewählt ist aus der Gruppe bestehend aus 1,1-Dipropylguanidin, 1-Ethyl-1-propylguanidin, 1-Methyl-1-propylguanidin, 1-Butyl-1-propylguanidin, 1-Ethyl-1-methylguanidin, 1,1-Dimethylguanidin, 1-Butyl-1-methylguanidin, 1,1-Diethylguanidin, 1-Butyl-1-ethylguanidin, 1,1-Dibutylguanidin, 1-Butyl-3,3-dimethyl-1-propylguanidin, 1-Butyl-1-ethyl-3,3-dimethylguanidin, 1-Butyl-1,3,3-trimethylguanidin, 1,1-Dibutyl-3,3-dimethylguanidin, 1-Butyl-3,3-diethyl-1-propylguanidin, 1-Butyl-1,3,3-triethylguanidin, 1-Butyl-3,3-diethyl-1-methylguanidin, 1,1-Dibutyl-3,3-diethylguanidin, 1-Ethyl-3,3-dimethyl-1-propylguanidin, 1,1,3-Triethyl-3-propylguanidin, 1,1-Diethyl-3,3-dimethylguanidin, 1-Ethyl-1,3,3-trimethylguanidin, 1,1,3,3-Tetraethylguanidin, 1,1,3,3-Tetramethylguanidin, 1,1,3-Triethyl-3-methylguanidin, 1,1,3-Trimethyl-3-propylguanidin, 1,1-Diethyl-3-methyl-3-propylguanidin, 1,1-Diethyl-3,3-dimethylguanidin, 1,1-Dimethyl-3,3-diproylguanidin, 1,1-Diethyl-3,3-dipropylguanidin und Mischungen davon.

4. Feste Katalysatorkomponente nach einem der vorhergehenden Ansprüche, wobei die Verbindung der Formel (I) 1,1,3,3-Tetramethylguanidin ist.

5. Katalysatorkomponente nach einem der vorhergehenden Ansprüche, wobei in der Verbindung der Formel (I) die Paare, die durch $R^1$-$R^4$ und $R^2$-$R^3$ gebildet werden, miteinander verbunden sind, um nicht-aromatische Ringstrukturen zu bilden.

6. Katalysatorkomponente nach einem der vorhergehenden Ansprüche, wobei sie unter Bildung von Ringstrukturen mit fünf oder mehr Gliedern verbunden sind.

7. Katalysatorkomponente nach einem der vorhergehenden Ansprüche, wobei das Paar $R^1$-$R^4$ eine gesättigte Ringstruktur mit 5 bis 7 Gliedern bildet, und das Paar $R^2$-$R^3$ einen sechsgliedrigen ungesättigten Ring bildet.

8. Katalysatorkomponente nach einem der vorhergehenden Ansprüche, wobei die Verbindung der Formel (I) ausgewählt ist aus 1,8-Diazabicyclo[5.4.0]undec-7-en (DBU) und 1,5-Diazabicyclo[4.3.0]non-5-en (DBN).

9. Feste Katalysatorkomponente nach einem der vorhergehenden Ansprüche, wobei der Gehalt der Verbindung (I) im Bereich von 1 bis 30 Gew.% liegt, bezogen auf das Gesamtgewicht der festen Katalysatorkomponente.

10. Katalysatorkomponente nach einem der vorhergehenden Ansprüche, wobei das molare Verhältnis von Mg/Ti im Bereich von 5,0 bis 50 liegt.

11. Katalysatorsystem zur Polymerisation von Olefinen, umfassend das Produkt der Reaktion zwischen:

    (A) einer festen Katalysatorkomponente gemäß einem oder mehreren der Ansprüche 1 bis 10,
    (B) einer Alkylaluminiumverbindung und gegebenenfalls
    (C) einer externen Elektronendonorverbindung (ED).

12. Verfahren zur Herstellung von Olefin(co)polymer, das durch (Co)polymerisieren von Olefinen in Gegenwart eines Katalysatorsystems gemäß Anspruch 11 durchgeführt wird.

13. Verfahren nach Anspruch 12 zur Herstellung von linearem Polyethylen mit niedriger Dichte (LLDPE).

14. Verfahren nach Anspruch 13, das in der Gasphase durchgeführt wird.

## Revendications

1. Constituant catalytique solide destiné à la (co)polymérisation d'oléfines, comprenant Ti, Mg, halogène et au moins un composé de formule (I)

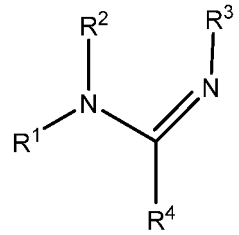

(I)

$R^1$ étant choisi dans le groupe constitué par hydrogène et les groupes hydrocarbonés linéaires, ramifiés ou cycliques en $C_1$-$C_{15}$ ;
$R^2$ étant choisi dans le groupe constitué par hydrogène et les groupes hydrocarbonés linéaires, ramifiés ou cycliques en $C_1$-$C_{15}$ ;
$R^3$ étant choisi dans le groupe constitué par hydrogène et les groupes hydrocarbonés linéaires, ramifiés ou cycliques en $C_1$-$C_{15}$ ;
$R^4$ étant choisi dans le groupe constitué par hydrogène, les groupes hydrocarbonés en Ci-$C_{15}$ et -$NR^5R^6$,
$R^5$ étant choisi dans le groupe constitué par hydrogène et les groupes hydrocarbonés linéaires, ramifiés ou cycliques en $C_1$-$C_{15}$ et
$R^6$ étant choisi dans le groupe constitué par hydrogène et les groupes hydrocarbonés linéaires, ramifiés ou cycliques en $C_1$-$C_{15}$ ;
et dans lequel les deux couples de groupes $R^1$ avec $R^4$ et $R^2$ avec $R^3$ peuvent éventuellement être joints pour former une structure cyclique non aromatique, ledit composé (I) étant présent en une quantité telle que le rapport molaire composé (I)/Ti dans le constituant catalytique solide final est situé dans la plage de 0,2 à 6.

**2.** Constituant catalytique selon la revendication 1, dans lequel, dans le composé de formule (I), $R^1$ et $R^2$ sont choisis parmi les groupes alkyle en $C_1$-$C_{10}$, de préférence en $C_1$-$C_5$ ; $R^3$ est choisi parmi hydrogène ou les groupes alkyle en $C_1$-$C_{15}$ et $R^4$ est choisi parmi les groupes -$NR^5R^6$, où $R^5$ et $R^6$ sont choisis parmi hydrogène ou les groupes alkyle en $C_1$-$C_5$.

**3.** Constituant catalytique selon l'une quelconque des revendications précédentes, dans lequel le composé (I) est choisi dans le groupe constitué par la 1,1-dipropylguanidine, la 1-éthyl-1-propylguanidine, la 1-méthyl-1-propylguanidine, la 1-butyl-1-propylguanidine, la 1-éthyl-1-méthylguanidine, la 1,1-diméthylguanidine, la 1-butyl-1-méthylguanidine, la 1,1-diéthylguanidine, la 1-butyl-1-éthylguanidine, la 1,1-dibutylguanidine, la 1-butyl-3,3-diméthyl-1-propylguanidine, la 1-butyl-1-éthyl-3,3-diméthylguanidine, la 1-butyl-1,3,3-triméthylguanidine, la 1,1-dibutyl-3,3-diméthylguanidine, la 1-butyl-3,3-diéthyl-1-propylguanidine, la 1-butyl-1,3,3-triéthylguanidine, la 1-butyl-3,3-diéthyl-1-méthylguanidine, la 1,1-dibutyl-3,3-diéthylguanidine, la 1-éthyl-3,3-diméthyl-1-propylguanidine, la 1,1,3-triéthyl-3-propylguanidine, la 1,1-diéthyl-3,3-diméthylguanidine, la 1-éthyl-1,3,3-triméthylguanidine, la 1,1,3,3-tétraéthylguanidine, la 1,1,3,3-tétraméthylguanidine, la 1,1,3-triéthyl-3-méthylguanidine, la 1,1,3-triméthyl-3-propylguanidine, la 1,1-diéthyl-3-méthyl-3-propylguanidine, la 1,1-diéthyl-3,3-diméthylguanidine, la 1,1-diméthyl-3,3-diproylguanidine, la 1,1-diéthyl-3,3-dipropylguanidine et leurs mélanges.

**4.** Constituant catalytique solide selon l'une quelconque des revendications précédentes, dans lequel le composé de formule (I) est la 1,1,3,3-tétraméthylguanidine.

**5.** Constituant catalytique selon l'une quelconque des revendications précédentes, dans lequel, dans le composé de formule (I), les couples formés par $R^1$-$R^4$ et $R^2$-$R^3$ sont joints ensemble pour former des structures cycliques non aromatiques.

**6.** Constituant catalytique selon l'une quelconque des revendications précédentes, dans lequel ils sont joints pour former des structures cycliques de cinq chaînons ou plus.

**7.** Constituant catalytique selon l'une quelconque des revendications précédentes, dans lequel le couple $R^1$-$R^4$ forme une structure cyclique saturée de 5 à 7 chaînons et le couple $R^2$-$R^3$ forme un cycle insaturé à six chaînons.

**8.** Constituant catalytique selon l'une quelconque des revendications précédentes, dans lequel le composé de formule (I) est choisi parmi le 1,8-diazabicyclo[5.4.0]undéc-7-ène (DBU) et le 1,5-diazabicyclo[4.3.0]non-5-ène (DBN).

**9.** Constituant catalytique solide selon l'une quelconque des revendications précédentes, dans lequel la teneur en composé (I) est située dans la plage de 1 à 30 % en poids par rapport au poids total du constituant catalytique solide.

**10.** Constituant catalytique selon l'une quelconque des revendications précédentes, dans lequel le rapport molaire Mg/Ti est situé dans la plage de 5,0 à 50.

**11.** Système catalytique destiné à la polymérisation d'oléfines, comprenant le produit de la réaction entre :

(A) un constituant catalytique solide selon l'une ou plusieurs des revendications 1 à 10,
(B) un composé d'alkylaluminium et, éventuellement,
(C) un composé donneur d'électrons externe (DE).

**12.** Procédé destiné à la préparation de (co)polymère oléfinique mis en oeuvre par (co)polymérisation d'oléfines en présence d'un système catalytique selon la revendication 11.

**13.** Procédé selon la revendication 12 destiné à la préparation de polyéthylène linéaire basse densité (LLDPE).

**14.** Procédé selon la revendication 13, mis en oeuvre en phase gazeuse.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1058696 A
- GB 1574830 A
- US 9815920 B
- WO 02051882 A
- US 4399054 A
- US 4469648 A
- WO 9844009 A

### Non-patent literature cited in the description


- **C. J. CARMAN ; R. A. HARRINGTON ; C. E. WILKES.** *Macromolecules,* 1977, vol. 10 (3), 536
- **J.C. RANDAL.** *Macromol. Chem Phys.,* 1989, vol. C29, 201